**Europäisches Patentamt**

**European Patent Office**

**Office européen des brevets**

(19)

(11) **EP 1 227 440 A2**

(12) **EUROPEAN PATENT APPLICATION**

(43) Date of publication:
**31.07.2002 Bulletin 2002/31**

(51) Int Cl.⁷: **G06T 5/40**

(21) Application number: **01205072.0**

(22) Date of filing: **21.12.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **02.01.2001 US 753087**

(71) Applicant: **EASTMAN KODAK COMPANY
Rochester, New York 14650 (US)**

(72) Inventors:
• **Gindele, Edward B., c/o Patent Legal Staff
Rochester, New York 14650-2201 (US)**
• **Serrano, Navid, c/o Patent Legal Staff
Rochester, New York 14650-2201 (US)**
• **Gallagher, Andrew, c/o Patent Legal Staff
Rochester, New York 14650-2201 (US)**
• **Gray, Robert T., c/o Patent Legal Staff
Rochester, New York 14650-2201 (US)**

(74) Representative: **Parent, Yves et al
KODAK INDUSTRIE,
Département Brevets,
CRT - Zone Industrielle
71102 Chalon-sur-Saône Cedex (FR)**

(54) **Method of calculating noise from multiple digital images utilizing common noise characteristics**

(57)     A method of enhancing one or more digital images from a plurality of digital images that are believed to be affected by a common noise source includes receiving two or more source digital images that are believed to be affected by a common noise source; using the pixels of the received source digital images to calculate a noise characteristic value that relates to the noise present in the received source digital images; and using the noise characteristic value and the received source digital images to respectively calculate enhanced digital images for the one or more of the received source digital images.

FIG. 1

**Description**

The present invention relates to a method for enhancing digital images using a noise characteristic common to such noise characteristics.

Some digital image processing applications designed to enhance the appearance of the processed digital images take explicit advantage of the noise characteristics associated with the source digital images. For example, Keyes and others in US-A-6,118,906 describe a method of sharpening digital images which includes the steps of measuring the noise components in the digital image with a noise estimation system to generate noise estimates and sharpening the digital image with an image sharpening system which uses the noise estimates. Similarly, digital imaging applications have incorporated automatic noise estimation methods for the purpose of reducing the noise in the processed digital images as in the method described by Anderson and others in US-A-5,809,178.

In US-A-5,923,775, Snyder and others disclose a method of image processing which includes a step of estimating the noise characteristics of a digital image and using the estimates of the noise characteristics in conjunction with a noise removal system to reduce the amount of noise in the digital image. The method described by Snyder and others is designed to work for individual digital images and includes a multiple step process for the noise characteristics estimation procedure. First, the residual signal is formed from the digital image obtained by applying a spatial filter to the digital image. This first residual is analyzed to form a mask signal which determines what regions of the digital image are more and less likely to contain image structure content. The last step includes forming a second residual signal and sampling the residual in image regions unlikely to contain image structure content to form the noise characteristic estimation.

In US-A-6,069,982, Reuman describes a method of estimating the noise characteristics of a digital image acquisition device which includes providing predetermined default values for the spatial noise characteristics of the digital image acquisition device, gathering information related to the spatial noise characteristics of the digital image acquisition device; generating replacement data in response to the gathered information; and updating the predetermined default spatial noise characteristics associated with the digital image acquisition device with the replacement data. In particular the method disclosed by Reuman estimates the standard deviation (derived from the variance) as a function of the grey-level (pixel value) and the spatial frequency characteristics of the noise. The noise characteristics, such as a table of standard deviation values as a function of grey-level, are provided as the default values. Each digital image to be processed is analyzed which includes the calculation of statistical quantities in the gathering of information step. These statistical quantities and the default values are combined to calculate the updated replacement noise characteristic values. Furthermore, in the method taught by Reuman, a yes/no decision is made with regard to the presence or the lack of the default noise values. If the default noise values are present, they are used. If the default noise values are not present, they are generated from the digital image to be processed with the aid of the operator of the system.

In the method taught by Reuman, the estimated noise characteristic values are specific to a digital image acquisition device. Reuman gives examples of digital images acquisition devices such as a film scanner, digital camera, or an image processing module. Although film scanners can add noise to the digital images they produce, much of the noise present in the output digital images can be attributed to the photographic film type. Thus, the noise characteristic values associated with the digital images derived from a scanned photographic film can be attributed to the type of photographic film independent of the film scanner device used to produce the digital image.

In US-A-5,959,720 Kwon and others disclose a method of color balance determination for use by a color copying apparatus utilizing multiple image frames of a photographic film order. Multiple individual digital images are produced by a film scanner and the pixel data of these digital images is collectively analyzed to calculation a color balance point relating to the set of digital images. The color balance point is then used to process each digital image for improved color balance. The method disclosed by Kwon and others is an example of a digital imaging analysis method which combines the analysis of pixel data from multiple digital images to improve the processing of pixel data for each of the digital images.

It is an object of the present invention to provide an improved way of enhancing digital images, which are believed to be affected by a common noise source.

This object is achieved by a method of enhancing one or more digital images from a plurality of digital images that are believed to be affected by a common noise source, comprising the steps of:

　　　a) receiving two or more source digital images that are believed to be affected by a common noise source;
　　　b) using the pixels of the received source digital images to calculate a noise characteristic value that relates to the noise present in the received source digital images; and
　　　c) using the noise characteristic value and the received source digital images to respectively calculate enhanced digital images for the one or more of the received source digital images.

It is a feature of the present invention to provide for improved image enhancement by taking advantage of the fact that for a particular group of digital images, they will contain similar amounts of noise. The present invention is particularly advantageous for enhancing images which are taken on a common photographic film type. These images will all share common noise characteristics which are substantially contributed to by the photographic film. Nevertheless, the present invention also is useful when the digital images are provided by a scanner or digital camera which also introduces common noise.

FIG. 1 is a functional block diagram showing the component parts of a digital imaging system implementation of the present invention;

FIG. 2 is a functional block diagram of the digital image processor module shown in FIG. 1 employed by a preferred embodiment of the present invention;

FIG. 3 is a function block diagram of the noise estimation module shown in FIG. 2 used by the preferred embodiment of the present invention;

FIG. 4 is a function block diagram of the noise estimation module used by an alternative embodiment of the present invention; and

FIG. 5 is a function block diagram of the noise estimation module used by another alternative embodiment of the present invention.

In the following description, a preferred embodiment of the present invention will be described as a software program. Those skilled in the art will readily recognize that the equivalent of such software may also be constructed in hardware. Because image manipulation algorithms and systems are well known, the present disclosure will be directed in particular to algorithms and systems forming part of, or cooperating more directly with, the method in accordance with the present invention. Other aspects of such algorithms and systems, and hardware and/or software for producing and otherwise processing the image signals involved therewith, not specifically shown or described herein may be selected from such systems, algorithms, components, and elements known in the art. Given the description as set forth in the following specification, all software implementation thereof is conventional and within the ordinary skill in such arts.

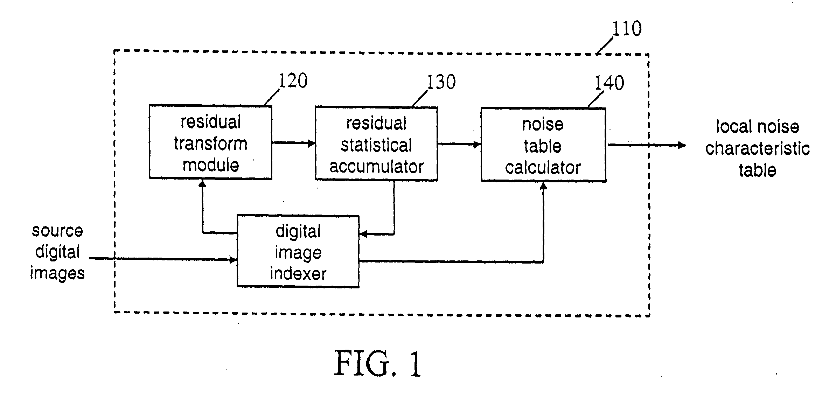

The present invention may be implemented in computer hardware. Referring to FIG. 1, the following description relates to a digital imaging system which includes an image capture device 10a, a digital image processor 20, an image output device 30a, and a general control computer 40. The system may include a monitor device 50 such as a computer console or paper printer. The system may also include an input device control 60 for an operator, such as a keyboard and or mouse pointer. Multiple capture devices 10a, 10b, and 10c are shown illustrating that the present invention may be used for digital images derived from a variety of imaging devices. For example, FIG. 1 may represent a digital photofinishing system where the image capture device 10a is a conventional photographic film camera for capturing a scene on color negative or reversal film, and a photographic film scanner for scanning the developed image on the film and producing a digital image. Although the term scanner can refer to digital imaging devices that physically scan or move a sensing element past a photographic film sample, the present invention also includes photographic film scanners and print scanners that employ a stationary image sensing device to generate a digital image. The digital image processor 20 the receives a set of digital images, processes these digital images to produce an enhanced digital image for one or more digital image in preparation for the intended output device or media. The digital image processor 20 analyzes the noise characteristics of the set of digital images and modifies the spatial characteristics of these digital images by employing a noise reduction filter and a spatial sharpening filter. In addition, the digital image processor 20 may process the set of digital images to make adjustments for color, density and tone scale in a manner such that a pleasing looking image is produced by an image output device 30a. Those skilled in the art will recognize that the present invention is not limited to just these mentioned image processing modules. Multiple image output devices 30a and 30b are shown illustrating that the present invention may be used in conjunction with a variety of output devices which may include a digital photographic printer and soft copy display. The present invention uses a digital photographic printer to make a print of the enhanced digital images to make photographic prints.

The general control computer 40 shown in FIG. 1 may store the present invention as a computer program stored in a computer readable storage medium, which may comprise, for example: magnetic storage media such as a magnetic disk (such as a floppy disk) or magnetic tape; optical storage media such as an optical disc, optical tape, or machine readable bar code; solid state electronic storage devices such as random access memory (RAM), or read only memory (ROM). The associated computer program implementation of the present invention may also be stored on any other physical device or medium employed to store a computer program indicated by offline memory device 70. Before describing the present invention, it facilitates understanding to note that the present invention is preferably utilized on any well known computer system, such as a personal computer.

It should also be noted that the present invention implemented in a combination of software and/or hardware is not limited to devices which are physically connected and/or located within the same physical location. One or more of the devices illustrated in FIG. 1 may be located remotely and may be connected via a wireless connection.

A digital image is comprised of one or more digital image channels. Each digital image channel is comprised of a two-dimensional array of pixels. Each pixel value relates to the amount of light received by a image capture device corresponding to the geometrical domain of the pixel. For color imaging applications a digital image will typically consist of red, green, and blue digital image channels. Other configurations are also practiced, for example cyan, magenta, and yellow digital image channels. For monochrome applications, the digital image consists of one digital image channel. Motion imaging applications can be thought of as a time sequence of digital images. Those skilled in the art will recognize that the present invention can be applied to, but is not limited to, a digital image channel for any of the above mentioned applications. Although the present invention describes a digital image channel as a two dimensional array of pixel values arranged by rows and columns, those skilled in the art will recognize that the present invention can be applied to mosaic (non rectilinear) arrays with equal effect.

While the discussion of the present invention hereinbelow describes processing digital images, it should be noted that processing digital images does not necessarily require that the entirety of a digital image must be processed. For example, selected regions within a digital image can be processed without processing the entire digital image and the digital image can still be said to have been processed. Similarly, the present invention can be practiced by processing only some of the digital image channels included in a digital image. It should also be noted that the present invention can be practiced with digital images of a variety of different image representations. For example, the present invention can be practiced with digital images having color pixels of red, green and blue. However, the present invention can also be practiced with digital images in a luminance-chrominance image representation.

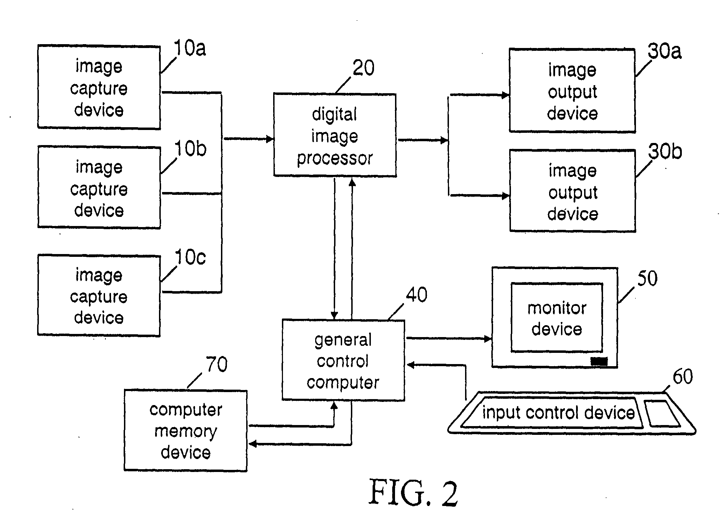

The digital image processor 20 shown in FIG. 1 is illustrated in more detail in FIG. 2. The general form of the digital image processor 20 employed by the present invention is a cascaded chain of image processing modules. The noise estimation module 110 receives the source digital images 101 and calculates a local noise characteristic table 105, that is a table of noise characteristic values, using the pixel values from the source digital images 101. Each image processing module contained within the digital image processor 20 receives a digital image, modifies the digital image, produces a processed digital image and passes the processed digital image to the next image processing module. The two enhancement transform modules shown within the digital image processor 20 are a noise reduction module 22 and a spatial sharpening module 23. These two modules use the local noise characteristic table 105 produced by the noise estimation module 110 to generate the enhanced digital images 102. Those skilled in the art will recognize that the any other image processing module that utilizes a noise characteristic table can be used with the present invention.

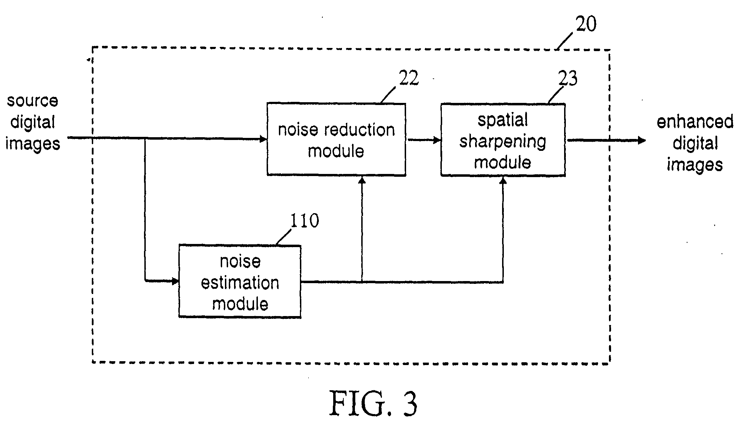

The noise estimation module 110 shown in FIG. 2 is illustrated in more detail in FIG. 3. The source digital images 101 are received by the digital image indexer 115 which dispatches each source digital image 101 to the residual transform module 120 for processing. The residual transform module 120 receives a source digital image 101, performs a spatial filtering operation on the pixel data of the source digital image 101 resulting in a residual digital image. The residual digital image produced for each source digital image 101 is received by the residual statistical accumulator 130 which calculates a set of local residual histograms. When the digital image indexer 115 has dispatched all of the source digital images 101, the digital image indexer 115 sends a message to the noise table calculator 140 that all of the source digital images 101 have been processed. The noise table calculator 140 receives the set of local residual histograms and produces a local noise characteristic table 105.

The residual transform module 120 uses a residual spatial filter to perform a spatial filtering operation on the pixel data of a digital image. A residual pixel value is generated for each original pixel value in the source digital image 101 by the residual spatial filter. For each pixel of interest, a combination of pixel values sampled from a local region of pixels is used to form the residual pixel value. If the source digital image 101 is a color digital image, the residual transform module 120 performs the spatial filtering operation on each color digital image channel and forms a residual pixel value for each pixel of each color digital image channel. The preferred embodiment of the present invention uses a two-dimensional Laplacian operator as the spatial filter to form the residual pixel values. The Laplacian operator calculates a local arithmetic mean value from the value of pixel sampled from the local region of pixels about the pixel of interest and subtracts the value of the pixel of interest from the local arithmetic mean value. A local region of 3 by 3 pixels is used. The Laplacian operator is a convolution spatial filter with an associated convolution kernel of:

$$
\begin{array}{ccc}
1 & 1 & 1 \\
1 & -1 & 1 \\
1 & 1 & 1
\end{array}
\qquad (1)
$$

Although the preferred embodiment of the present invention uses a two dimensional Laplacian based residual spatial filter, those skilled in the art will recognize that the present invention can be practiced with other spatial filters, such as but not limited to, one-dimensional Laplacian spatial filters.

An alternative embodiment of the present invention uses the method disclosed by Snyder and others in US-A-5,923,775. In this alternative embodiment, a similar technique of forming a residual pixel value is performed. Next, a gradient signal is calculated using a spatial filter. The gradient signal is analyzed forming a masking signal that is used to reject some of the residual pixel values from later consideration. Although this alternative embodiment leads to more accurate noise estimation it is also more computationally intensive than the preferred embodiment.

The pixel data of the source digital image 101 can be conceptualized as having two components - a signal component relating to photographed objects and a noise component. The resulting residual pixel values have statistical properties that have a closer relationship to the noise component of the pixel data of the source digital image 101 than the signal component. Although the noise component can contain sub-components, the stochastic subcomponent of the noise component is well modeled by a zero mean Gaussian probability distribution function. To first order, the noise component of the pixel data of the source digital image 101 can be characterized by a standard deviation and a mean value of zero. To second order, standard deviation of the noise component can be modeled as being signal and color channel dependent.

The residual transform module 120 analyzes the residual pixel values and records these values in the form of a set of local residual histograms as a function of the pixel color and numerical pixel value. Therefore, a given local residual histogram $H_{ik}$ relates to the $i^{th}$ color digital image channel and the $k^{th}$ pixel value sub-range. For each pixel of interest denoted by $p_{mn}$ (corresponding to the $m^{th}$ row and $n^{th}$ column location) in the processed color digital image channel, a histogram bin index k is computed. For example, if the numerical range of pixel values is from 0 to 255 there can be as many as 256 useful histograms, that is one histogram for each possible numerical pixel value. In general, most noise sources can be characterized as having noise standard deviations that are slow functions of the pixel value. Therefore, the preferred embodiment of the present invention uses 8 histograms to cover the numerical pixel value range from 0 to 255. Thus, the calculated histogram index bin and the corresponding sub-range pixel values are given by the following Table 1.

Table 1

| histogram bin index | sub-range pixel values | average pixel value |
|---|---|---|
| 0 | 0 to 31 | 16 |
| 1 | 32 to 63 | 48 |
| 2 | 64 to 95 | 80 |
| 3 | 96 to 127 | 112 |
| 4 | 128 to 159 | 144 |
| 5 | 160 to 191 | 176 |
| 6 | 192 to 233 | 208 |
| 7 | 234 to 255 | 240 |

Those skilled in the art will recognize that the present invention can be practiced with digital image pixel data with any numerical range. The number of local residual histograms used for each color digital image channel will depend on the accuracy of results required for the particular digital imaging application.

Although each local residual histogram records statistical information for a range of pixel values for a given color digital image channel, the local residual histogram records the frequency of residual pixel values associated with each pixel of interest $p_{mn}$. Since the expected mean of the distribution of residual pixel values is zero, the residual pixel values exhibit both positive and negative values. Therefore, the local residual histogram must record the frequency, that is the number of instances of residual pixel values, of all possible instances of residual pixel values. For the example above, the residual pixel values can range from -255 to +255. While it is possible to construct local residual histograms with as many recording bins as there are possible instances of residual pixel values, in general it is not necessary. For most digital images, only a small percentage of residual pixel values exhibit values near the extremes of the possible range. The present invention uses 101 total recording bins for each local residual histogram. One of the recording bins corresponds to residual pixel values of 50 and greater. Similarly, one other recording bin corresponds to residual pixel values of -50 and lower. The other 99 recording bins each correspond to a single residual pixel value for the numerical range from -49 to +49.

Referring to FIG. 3, the noise table calculator 140 receives a set of local residual histograms and calculates the local noise characteristic table 105 in the form of a table of standard deviation values. For each of the local residual histograms relating to a particular color digital image channel and pixel value range, the noise table calculator 140 derives a noise standard deviation value from the value of the recording cells of the local residual histogram. The preferred embodiment of the present invention uses equation (2) to calculate the standard deviation value $\sigma_n$

$$\sigma_n = ((1/N) \, \Sigma_k \, RC_v(k) \, (x - x_m)^2)^{1/2} \tag{2}$$

where the variable x represents the average pixel value of the residual pixel values accumulated in the $k^{th}$ recording cell as given by Table (1) and $RC_v(k)$ represents the number of residual pixel values accumulated by the $k^{th}$ recording cell.

$$x = V(k) \tag{3}$$

The variable $x_m$ represents the arithmetic mean value of the corresponding residual pixel values given by equation (4),

$$x_m = (1/N) \, \Sigma_k \, x \tag{4}$$

and the variable N represents the total number of residual pixel values recorded by the updated residual histogram given by equation (5).

$$N = \Sigma_k \, RC_v(k) \tag{5}$$

An alternative embodiment of the present invention performs an alpha-trimmed standard deviation calculation. In this embodiment a first approximation to the standard deviation $\sigma_e$ is calculated using the method described above. The calculation of $\sigma_n$ is then calculated using the only recording cells with corresponding residual pixel values that are within a limited range of zero. The formula for the standard deviation calculation $\sigma_n$ is given by equation (6)

$$\sigma_n = ((1/N) \, \Sigma_k \gamma \, RC_v(k) \, (x - x_m)^2)^{1/2} \tag{6}$$

where the variable $\gamma$ is given by equation (7)

$$\gamma = 1 \text{ if } |x| < \alpha \, \sigma_e \tag{7}$$

$$\gamma = 0 \text{ if } |x| >= \alpha \, \sigma_e$$

where the variable $\alpha$ is set to 3.0. This alternative embodiment of the present invention is more computationally intensive than the preferred embodiment but does yield more accurate results via the rejection of out-lying residual pixel values from adversely contributing to the calculation of the standard deviation $\sigma_n$ value.

Table 2 below is an example of a noise characteristic table produced with the present invention.

Table 2

| average pixel value | Standard deviation of red channel | Standard deviation of green channel | Standard deviation of blue channel |
|---|---|---|---|
| 16 | 3.28 | 3.62 | 3.21 |
| 48 | 3.71 | 3.20 | 3.38 |
| 80 | 3.77 | 4.14 | 4.50 |
| 112 | 4.57 | 4.35 | 4.21 |

Table 2   (continued)

| average pixel value | Standard deviation of red channel | Standard deviation of green channel | Standard deviation of blue channel |
|---|---|---|---|
| 144 | 4.98 | 4.25 | 4.37 |
| 176 | 5.05 | 4.11 | 6.21 |
| 208 | 5.05 | 5.64 | 6.29 |
| 240 | 2.71 | 4.27 | 3.87 |

Those skilled in the art will recognize that the present invention can be practiced with calculated quantities other than the standard deviation that relate to the noise present in digital images. For example, the statistical variance (a squared function of the standard deviation) or statistical median can also be derived from the residual histograms and be used to form a table of noise characteristic values.

The present invention uses a set of residual histograms to record the calculated statistics. A set of histograms is an example of a statistical table from which a noise characteristic table can be derived. Thus, the set of local residual histograms constitutes a statistical table, that is a local statistical table. Those skilled in the art will recognize that the present invention can be practiced with other forms of statistical tables. For example, the residual digital images could be stored and serve as a statistical table. It should be noted that the present invention uses a set of residual histograms as the form for the statistical table due to its inherent computational and storage simplicity and economy.

The present invention produces more accurate noise characteristic tables through the feature of combining the residual statistics of multiple digital images. With more pixel data considered from multiple digital images, the standard deviation values of the calculated noise characteristic table converge to the true inherent noise characteristics of the underlying recording medium. For many digital imaging applications, a plurality of digital images derived from a common image source will be affected by a common noise source.

The above discussion has included details of practicing the present invention for digital images of general type. However, most digital imaging systems accept digital images from a variety of sources. For example, the image capture device 10a and 10b shown in FIG. 1 could be a photographic film scanner while the image capture device 10c could be a digital camera, digital camcorder, or print scanner. The image capture device can contribute noise to the digital images it produces. However, the inherent noise in the capture medium usually dominates the overall noise characteristics of the resultant digital images. For example, while a photographic film scanner can produce digital images from any photographic film type, in general, some photographic films are inherently noisier that others. A photographic film sample is an example of a photographic image. Other examples of photographic images can include, but are not limited to, a CCD imaging electronic device and a photographic print.

In an alternative embodiment of the present invention, the image capture devices 10a, 10b, and 10c shown in FIG. 1 are capable of producing a source type identification tag 103, as shown in FIG. 2, which uniquely identifies a set of digital images as belonging to a particular group. In the example given above, a photographic film sample Kodak Generation 6 Gold 200 film is scanned by the image capture device 10a which produces a set of source digital images 101 and a source type identification tag 103. The digital imaging system maintains a plurality of stored source type identification tags which correspond to a plurality of stored default noise characteristic tables which correspond to different types of photographic films, print scanners, and digital cameras or the like. The digital imaging system uses the source type identification tag to select the appropriate default noise characteristic table. Referring to FIG. 3, the source type identification tag 103 is received by the digital image indexer 115 of the noise estimation module 110 shown in FIG. 2. The source type identification tag 103 identifies the source digital images 101 as being Kodak Generation 6 Gold 200 film. Digital images produced by other image capture devices, such as a particular model digital camera, have a corresponding unique source type identification tag. In similar fashion, the set of digital images marked with a source type identification tag are processed to produce a local noise characteristic table 105 which in turn is used to generate enhanced digital images 102. The source type identification tag 103 can also further identify a set of digital images that belong to a particular consumer. For this alternative embodiment, just the digital images marked with the particular consumer's source type identification tag 103 will be processed as a set. Of course, it is also possible that a particular consumer may issue more than one set of photographic images for processing.

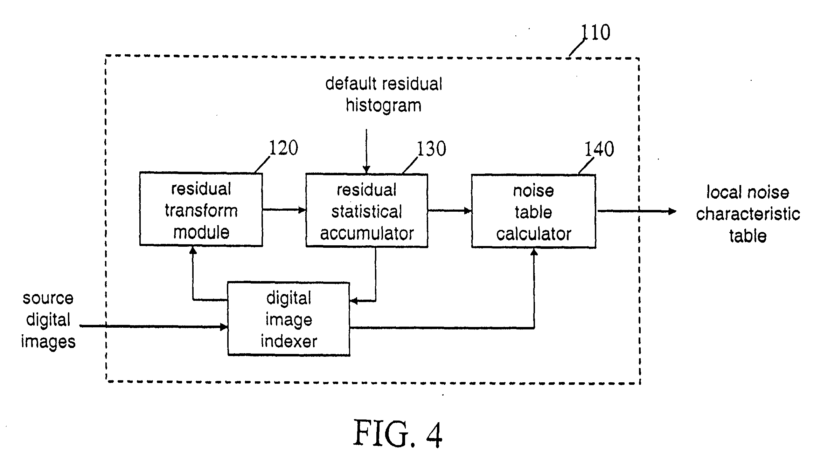

The above described alternative embodiment of the present invention makes use of grouping digital images based on the source of the imagery. The statistical accuracy of the calculated noise characteristic table can be further improved if the statistics from previously processed sets of source digital images derived from the same source of imagery are combined. In a further alternative embodiment of the present invention a default statistical table 106 (as shown in FIG. 4), that is maintained and provided by the digital imaging system, is used in conjunction with the pixels from the source digital images 101 to calculate a local noise characteristic table 105 for the source digital images 101.

However, the digital imaging system, shown in FIG. 1, stores a default statistical table 106 corresponding to each unique source type identification tag 103. Thus, the default statistical table 106 corresponding to Kodak Generation 6 Gold 200 film is used to process the source digital images 101 derived from the scanning the Kodak Generation 6 Gold 200 film sample with the image capture device 10a. It is important to note that if a different sample of Kodak Generation 6 Gold 200 film is scanned by the image capture device 10b, the same default statistical table corresponding to Kodak Generation 6 Gold 200 film is used. Thus, the default statistical table 106 is selected on the basis of the type of photographic film and not necessarily on the type of or individual unit image capture device. This feature of the present invention allows the default statistical table 106, and consequently the resultant calculated local noise characteristic table 105, to track or relate to the type of photographic film manufactured. Since the present invention automatically updates the default statistical table 106 and can derive the default statistical table 106 from the pixel values of digital images, the present invention can be used with new types of manufactured photographic film without the need of a disseminated a data base of either statistical tables or noise characteristic tables.

Those skilled in the art will recognized that this feature of the present invention can easily be extended to include other sources of digital images. For example, the image capture device 10c can be a digital still camera, such as the Kodak DCS 290. For this example, the image capture device 10c produces a unique source type identification tag 103. In this manner any newly produced digital camera which produces a new and unique source type identification tag can be processed effectively with the present invention. When the digital imaging systems shown in FIG. 1 encounters a previously unknown source type identification tag 103, a new default statistical table 106 is created.

In another alternative embodiment of the present invention, the digital imaging system shown in FIG. 1 maintains a separate database of default statistical tables 106, one for each source identification tag 103, for each image capture device 10a and 10b. Since the image capture device can contribute some noise to the digital images it produces, maintaining separate databases of default statistical tables for each image capture device results in more accurate noise characteristic tables.

As shown in FIG. 4, the residual statistical accumulator 130 combines the default statistical table 106, in the form of a default residual histograms, with the local residual histograms. While the local residual histograms record residual pixel values as derived from the currently processed set of source digital images 101, the default residual histograms record the residual pixel values as derived from the previously processed digital images. Thus, the default residual histograms have exactly the same form as the local residual histograms, that is one local residual histogram for each pixel value sub-range of each color digital image channel.

The present invention uses more than one method of combining the local residual histograms with the default residual histograms, however, each method combines a single local residual histogram with the corresponding default residual histogram. Therefore, it is appropriate only to discuss the method with respect to the combination of two histograms with the assumption that each combining method is repeated for all the pairs of histograms.

This alternative embodiment of the present invention uses a direct method of combining the data contained in the local residual histogram and default residual histogram. That is, the numbers contained in each recording cell of the local residual histogram are added directly to the corresponding recording cell of the default residual histogram. Thus, after the combining step has been performed, the updated values of each recording cell is given by the sum of the previous value of the recording cell with the value contained in the corresponding recording cell of the local residual histogram.

Since the recording cells of the default residual histogram contains the sum total of residual pixel values derived from the set of source digital images as well as previous processed digital images, the numerical range of the computer implementation can be exceeded. To avoid a numerical overflow condition, the default residual histogram can be re-normalized. The process of re-normalization includes scanning the values of the recording cells to determine the maximum value, comparing this maximum value to a predetermined allowable value. If the maximum value is greater than the a predetermined allowable value, the values of all the recording cells are divided by a constant numerical factor. This process of re-normalization of the default residual histogram can be performed either before or after the process of combining the local residual histogram with the default residual histogram. The preferred embodiment of the present invention performs the re-normalization process before the combining process.

An alternative embodiment of the present invention produces the updated residual histogram by calculating a weighted average between the default residual histogram and the local residual histogram. For each recording cell of the default residual histogram $RC_d$ and its corresponding recording cell of the local residual histogram $RC_1$, the updated recording cell value $RC_v$ is calculated using the formula:

$$RC_v = \beta\, RC_d + (1 - \beta)\, RC_1 \tag{8}$$

where the variable $\beta$ is a numerical weighting factor. The present invention uses $\beta$ value of 0.99 for a which heavily weights the contribution of the default residual histogram. This alternative embodiment of the present invention uses a linear combination of the local residual histogram and the default residual histogram.

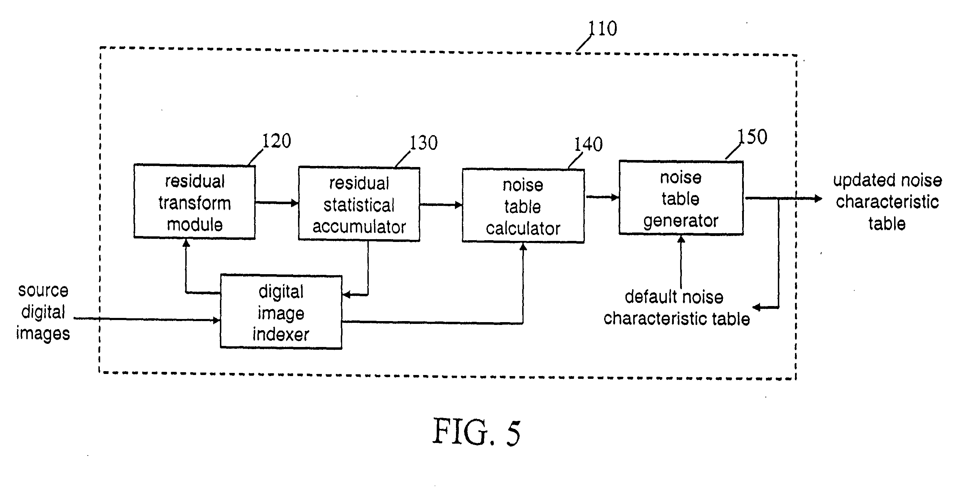

The present invention can be practiced by recording a default noise characteristic table, that is maintained and provided by the digital imaging system, instead of recording the residual histograms. FIG. 5 shows the details of an alternative embodiment of the noise estimation module 110. As described in the alternative embodiment above, a set of local residual histograms is calculated from the source digital images 101. The noise table calculator 140 receives the local residual histograms and produces a local noise characteristic table 105. The noise table generator 150 receives the local noise characteristic table and a default noise characteristic table 107 and produces an updated noise characteristic table 108. This updated noise characteristic table 108 replaces the default noise characteristic table 107 for the next source digital image 101 to be processed. The local noise characteristic table 105 and default noise characteristic table 107 are combined by calculating a linear combination of these two tables element for element. Good values for the linear combination coefficients are 0.99 contribution for the default noise characteristic table values and 0.01 for the local noise characteristic table values. Although this alternative embodiment of the present invention can be used to generate robust noise characteristic tables, the alternative embodiment that combines residual histograms generally produces more accurate results.

The calculated noise characteristic table is used in conjunction with spatial filters to produce an enhanced digital image 102 from a source digital image 101. A spatial filter is any method which uses pixel values sampled from a local region about a pixel of interest to calculate an enhanced pixel value which replaces the pixel of interest. Those spatial filters which reduce spatial modulation, for at least some pixels in an effort to remove noise from the processed digital image, can be considered noise reduction filters. Those spatial filters which increase spatial modulation, for at least some pixels, in an effort to enhance spatial detail noise in the processed digital image, can be considered spatial sharpening filters. It should be noted that it is possible for a single spatial filter to be considered both a noise reduction filter as well as a spatial sharpening filter. The present invention can be used with any digital image processing method which makes uses of a noise characteristic table to produce an enhanced digital image 102. Spatial filters that adjust a processing control parameter as a function of either the color or numerical value of pixels are adaptive spatial filters. The present invention uses a noise reduction filter and a spatial sharpening filter which are responsive to a noise characteristic table.

Referring to FIG. 2, the preferred embodiment of the present invention employs a noise reduction module 22 as part of the image processing method to produce enhanced digital images 102. As such, the source digital image 101 and the local noise characteristic table 105 are received by the noise reduction module 22 which produces on output a noise reduced digital image.

It is important to note that for many practical digital imaging image systems, other image processing processors need to be included. As long as these other image processing processors accept a digital image as input and produce a digital image on output, more of these type of image processing modules can be inserted in the image processing chain in between a noise reduction module 22 and a spatial sharpening module 23.

The present invention uses a modified implementation of the Sigma filter, described by Jong-Sen Lee in the journal article *Digital Image Smoothing and the Sigma Filter,* Computer Vision, Graphics, and Image Processing Vol 24, p. 255-269, 1983, as a noise reduction filter to enhance the appearance of the processed digital image. The values of the pixels contained in a sampled local region, n by n pixels where n denotes the length of pixels in either the row or column direction, are compared with the value of the center pixel, or pixel of interest. Each pixel in the sampled local region is given a weighting factor of one or zero based on the absolute difference between the value of the pixel of interest and the local region pixel value. If the absolute value of the pixel value difference is less or equal to a threshold $\epsilon$, the weighting factor if set to one. Otherwise, the weighting factor is set to zero. The numerical constant $\epsilon$ is set to two times the expected noise standard deviation. Mathematically the expression for the calculation of the noise reduced pixel value is given as

$$q_{mn} = \Sigma_{ij} \, a_{ij} \, p_{ij} \, / \, \Sigma_{ij} \, a_{ij} \qquad (9)$$

and

$$a_{ij} = 1 \text{ if } |p_{ij} - p_{mn}| <= \epsilon$$

$$a_{ij} = 0 \text{ if } |p_{ij} - p_{mn}| > \epsilon$$

where $p_{ij}$ represents the $ij^{th}$ pixel contained in the sampled local region, $p_{mn}$ represents the value of the pixel of interest located at row m and column n, $a_{ij}$ represents a weighting factor, and $q_{mn}$ represents the noise reduced pixel value. Typically, a rectangular sampling region centered about the center pixel is used with the indices i and j varied to sample the local pixel values.

The signal dependent noise feature is incorporated into the expression for $\varepsilon$ given by equation (10)

$$\varepsilon = Sfac\ \sigma_n(p_{mn}) \qquad (10)$$

where $\sigma_n$ represents the noise standard deviation of the source digital image 101 evaluated at the center pixel value $p_{mn}$ as described by equations (3) and (8) above. The parameter *Sfac* is termed a scale factor can be used to vary the degree of noise reduction. The optimal value for the *Sfac* parameter has been found to be 1.5 through experimentation however values ranging from 1.0 to 3.0 can also produce acceptable results. The calculation of the noise reduced pixel value $q_{mn}$ as the division of the two sums is then calculated. The process is completed for some or all of the pixels contained in the digital image channel and for some or all the digital image channels contained in the digital image. The noise reduced pixel values constitute the noise reduced digital image. The modified implementation of the Sigma filter is an example of a noise reduction filter that uses a noise characteristic table and is therefore an adaptive noise reduction filter which varies the amount of noise removed as a function of the pixel color and numerical value.

Referring to FIG. 2, the preferred embodiment of the present invention employs a spatial sharpening module 23 as part of the image processing method to produce an enhanced digital image 102. As such, the noise reduced digital image and the local noise characteristic table 105 are received by the spatial sharpening module 23 which produces on output an enhanced digital image 105.

Although the present invention can be used with any spatial sharpening filter which utilizes a priori knowledge of the noise characteristics, the preferred embodiment uses a modified implementation of the method described by Kwon and others in US-A-5,081,692. This spatial sharpening method performs an unsharp masking operation by filtering the input digital image with a spatial averaging 2-dimensional Gaussian filter (characterized by a standard deviation of 2.0 pixels) which results in a blurred digital image. The blurred digital image is subtracted from the input digital image to form a high-pass residual. In the method disclosed by Kwon and others a local variance about a pixel of interest is calculated by using the pixel data from the high-pass residual Based on the value of the local variance a sharpening factor is adjusted so as to amplify large signals more than small amplitude signals. The amplification factor $\phi$ is therefore a factor of the local variance $v$. that is $\phi(v)$.

The present invention modifies the method taught by Kwon and others to make the amplification factor $\phi(v)$ a function of the estimated noise, that is $\phi(v, \sigma_n)$. The amplification function f is given by a gamma function, or integral of a Gaussian probability function, as given by equation (11).

$$\phi(v) = \frac{y_o + y_{max} \sum e^{-(v - v_0)^2/2s^2}}{y_o + y_{max} \sum e^{-(v_{max} - v_o)^2/2s^2}} \qquad (11)$$

(11) where $y_o$ represents a minimum amplification factor $y_{max}$ represents a maximum amplification factor, $v_{max}$ represents a maximum abscissa value of the variable $v$, $v_o$ represents a transition parameter and *s* represents a transition rate parameter. The variable $v_o$ is a function of the noise standard deviation value $\sigma_n$ as per equation (12)

$$v_o = Sfac_2\ \sigma_n(p_{mn}) \qquad (12)$$

where the scaling factor *Sfac$_2$* determines the sensitivity of the sharpening sensitivity to the noise and the noise standard deviation value $\sigma_n$ is as described above in equations (3) and (8). The optimal values for the variables used in equation (12) depend on the digital imaging application. The present invention uses a value of 1.0 for $y_O$ which results in no spatial sharpening for noisy regions. A value of 3.0 is used for $y_{max}$, however, this variable is sensitive to user preference with values ranging from 2.0 to 4.0 producing acceptable results. The value of *Sfac$_2$* should be set to between 1.0 and 2.0 with 1.5 as optimal. The variables should be set to values in the range from vo / 2 to vo / 10 for reasonable results. The variable $v_{max}$ should be set to a value much larger than the expected noise, for example 20 times the value of $\sigma_n$.

While the preferred embodiment of the present invention calculates a noise characteristic table and then subsequently uses the noise characteristic table to produce an enhanced digital image, some digital imaging systems may be configured to separate the calculation phase from the enhancement phase. In an alternative embodiment of the present invention, the calculated noise characteristic table is stored with the source digital image 101 as meta-data, that is non-pixel information. The source digital image 101 with meta-data can be transmitted to a remote site or stored for safe keeping to be used at a later time or another site. Any of the above mentioned noise characteristic tables can be stored as meta-data. In general a noise characteristic table requires much less memory storage than a set of residual histograms. However, a set of residual histograms can be stored with the source digital image 101 as meta-data.

A computer program product may include one or more storage medium, for example; magnetic storage media such as magnetic disk (such as a floppy disk) or magnetic tape; optical storage media such as optical disk, optical tape, or machine readable bar code; solid-state electronic storage devices such as random access memory (RAM), or read-only memory (ROM); or any other physical device or media employed to store a computer program having instructions for operating one or more computers to practice a method according to the present invention.

Other features of the invention are included below.

The method wherein the adaptive spatial filter is a spatial sharpening filter or a noise reduction filter.

The method wherein the received source digital images are received from a single image capture device including a digital camera, a photographic film scanner or print scanner.

The method wherein all of the received source digital images are derived from the same photographic film type.

The method wherein all of the received source digital images are derived from the same consumer.

The method wherein the received source digital images have pixels corresponding to different colors and in step d) including calculating the local noise characteristic values as a function of the color of the received source digital image pixels.

The method wherein the received source digital images have pixels corresponding to different colors and in step d) including calculating the local noise characteristic values as a function of the color and the numerical values of the received source digital image pixels.

The method wherein the local noise characteristic value is a function of the standard deviation of the noise present in the received source digital images.

The method wherein the received source digital images have pixels corresponding to different colors and in step d) including the step of generating the residual histograms as a function of the color and the numerical values of the received source digital image pixels and calculating the corresponding local noise characteristic values as a function of the color and the numerical values of the received source digital image pixels.

The method wherein the source identification tag identifies that the received source digital images are derived from a single image capture device including a digital camera, a photographic film scanner or print scanner.

The method wherein the received source identification tag identifies that all of the received source digital images are derived from the same photographic film type.

The method wherein the source identification tag identifies that all of the received source digital images are derived from the same consumer.

The method further including using the updated noise characteristic value to enhance one or more of the received source digital images.

The method further including using an adaptive spatial filter responsive to the updated noise characteristic value to enhance one or more of the received source digital images.

The method wherein the adaptive spatial filter is a sharpening filter or a noise reduction filter.

A method of estimating a noise characteristic value for a plurality of source digital images which are believed to be affected by a common noise source, comprising the steps of:

a) receiving two or more source digital images which are believed to be affected by a common noise source;
b) receiving a source type identification tag corresponding to the source digital images;
c) using the source type identification tag to select a default residual histogram from a plurality of stored default residual histograms;
d) using the pixels of the received source digital images to calculate a local residual histogram;
e) combining the selected default residual histogram and the local residual histogram to generate an updated residual histogram; and
f) using the updated residual histogram to calculate the noise characteristic value. The method wherein the received source digital images have pixels corresponding to different colors and step d) includes the step of calculating the local residual histograms as a function of the color of the received source digital image pixels and step f) includes calculating the noise characteristic values as a function of the color of the received source digital image pixels from the corresponding updated residual histogram.

The method wherein the received source digital images have pixels corresponding to different colors and step d) includes the step of calculating the local residual histograms as a function of the color and the numerical values of the received source digital image pixels and step f) includes calculating the noise characteristic values as a function of the color and numerical values of the received source digital image pixels from the corresponding updated residual histogram.

The method wherein the noise characteristic value is a function of the standard deviation of the noise present in the received source digital images.

The method further including using the noise characteristic value to enhance one or more of the received source digital images.

The method further including using an adaptive spatial filter responsive to the noise characteristic value to enhance one or more of the received source digital images.

The method wherein the adaptive spatial filter is a spatial sharpening filter or a noise reduction filter.


**Claims**

1. A method of enhancing one or more digital images from a plurality of digital images that are believed to be affected by a common noise source, comprising the steps of:

   a) receiving two or more source digital images that are believed to be affected by a common noise source;
   b) using the pixels of the received source digital images to calculate a noise characteristic value that relates to the noise present in the received source digital images; and
   c) using the noise characteristic value and the received source digital images to respectively calculate enhanced digital images for the one or more of the received source digital images.

2. The method of claim 1 wherein step b) includes calculating the noise characteristic values as a function of the numerical values of the received source digital image pixels.

3. The method of claim 1 wherein the source digital images have pixels corresponding to different colors and step b) includes calculating the noise characteristic values as a function of the color of the received source digital image pixels.

4. The method of claim 1 wherein the source digital images have pixels corresponding to different colors and step b) includes calculating the noise characteristic values as a function of the color and the numerical values of the received source digital image pixels.

5. The method of claim 1 wherein the noise characteristic value is a function of the standard deviation of the noise present in the source digital images.

6. The method of claim 1 wherein step b) includes:

   using a residual spatial filter to calculate a residual digital image for each received source digital image;
   using the pixel values of the residual digital images to generate a residual histogram; and
   using the residual histogram to calculate the noise characteristic value.

7. The method of claim 6 wherein the source digital images have pixels corresponding to different colors and step b) includes the step of generating the residual histograms as a function of the color and the numerical values of the received source digital image pixels and calculating the corresponding noise characteristic values as a function of the color and the numerical values of the received source digital image pixels.

8. The method of claim 1 wherein step c) further includes using an adaptive spatial filter responsive to the noise characteristic value to calculate the enhanced digital images.

9. In a method of enhancing one or more digital images of a plurality of digital images which are believed to be affected by a common noise source, comprising the steps of:

   a) receiving two or more received source digital images which are believed to be affected by a common noise source;
   b) using the pixels of the received source digital images to calculate a noise characteristic value which relates to the noise present in the received source digital images; and

c) storing the noise characteristic value with the received source digital images so that the noise characteristic value and the received source digital images can subsequently be used to generate one or more enhanced digital images.

**10.** A method of calculating an updated noise characteristic value for a plurality of source digital images which are believed to be affected by a common noise source, comprising the steps of:

a) receiving two or more received source digital images which are believed to be affected by a common noise source;
b) receiving a source type identification tag corresponding to the received source digital images;
c) using the source type identification tag to select an appropriate default noise characteristic value from a plurality of stored default noise characteristic values;
d) using the pixels of the received source digital images to calculate a local noise characteristic value; and
e) combining the selected default noise characteristic value and the local noise characteristic value to calculate the updated noise characteristic value.

```
                                                    ┌ 110
        ┌───────────────────────────────────────────────────────────┐
        ¦                                                             ¦
        ¦          ┌120          ┌130          ┌140                   ¦
        ¦    ┌──────────┐   ┌──────────┐   ┌──────────┐               ¦
        ¦    │ residual │   │ residual │   │  noise   │               ¦        local noise
        ¦    │transform │──▶│statistical│──▶│  table   │──────────────────────▶ characteristic
        ¦    │ module   │   │accumulator│   │calculator│               ¦           table
        ¦    └──────────┘   └──────────┘   └──────────┘               ¦
        ¦          ▲              │              ▲                     ¦
        ¦          │    ┌──────────┐             │                     ¦
 source │          │    │  digital │             │                     ¦
digital ────────────────▶│  image  │─────────────┘                     ¦
images  ¦          └─────│  indexer │                                   ¦
        ¦                └──────────┘                                   ¦
        └───────────────────────────────────────────────────────────┘
```

## FIG. 1

FIG. 2

EP 1 227 440 A2

source
digital
images

enhanced
digital
images

20

22
noise reduction
module

23
spatial
sharpening
module

110
noise
estimation
module

FIG. 3

default residual
histogram

110

residual
transform
module
120

residual
statistical
accumulator
130

noise
table
calculator
140

local noise
characteristic
table

source
digital
images

digital
image
indexer

FIG. 4

FIG. 5